# EUROPEAN PATENT APPLICATION

(11) **EP 3 748 577 A1**
(43) Date of publication of application: **09.12.2020**
(21) Application number: 19747339.0
(22) Date of filing: 24.01.2019
(51) Int. Cl.: G06T 7/00

(54) **INFORMATION PROCESSING DEVICE**

(30) Priority: 31.01.2018 JP 2018014274
(71) Applicant: NEC Corporation, 108-8001 Tokyo (JP)
(72) Inventor: KOCHI, Taketo, Tokyo 108-8001 (JP); SAITO, Kenji, Tokyo 108-8001 (JP)
(74) Representative: Vossius & Partner Patentanwälte Rechtsanwälte mbB
(86) International application number: PCT/JP2019/002334
(87) International publication number: WO 2019/151116

(57) **Abstract**

An information processing device of the present invention includes: a matching means that executes a matching process of performing matching between an object within a captured image obtained by capturing a pre-passing side region of a gate and a previously registered object; a distance estimating means that estimates a distance from the gate to the object within the captured image by using a reference value set based on an attribute of the object within the captured image; and a gate controlling means that controls opening and closing of the gate based on a result of the matching and the estimated distance to the object within the captured image.

## Description

### TECHNICAL FIELD

The present invention relates to an information processing device, an information processing system, a program, and an information processing method.

### BACKGROUND ART

As a means for restricting and managing persons who enter and exit a specific place such as an office or an event venue, a matching system is used that checks whether or not a person who is about to pass through is a previously registered person. In particular, in recent years, a walk-through face authentication system that performs face authentication based on the face image of a person captured by a camera installed at a gate has been used owing to development of a person face authentication technology.

Patent Document 1: Japanese Unexamined Patent Application Publication No. JP-A 2016-083225

A walk-through face authentication system needs to perform matching of persons who are in a line at a gate in order and to open and close the gate so that the persons can smoothly pass through the gate. However, there are various persons who are going to pass through the gate, and it is difficult to properly determine their sequence. As a result, there arises a problem that smoothly passing through the gate is difficult.

### SUMMARY

Accordingly, an object of the present invention is to solve the abovementioned problem that smoothly passing through a gate is difficult.

An information processing device according to an aspect of the present invention includes: a matching means that executes a matching process of performing matching between an object within a captured image obtained by capturing a pre-passing side region of a gate and a previously registered object; a distance estimating means that estimates a distance from the gate to the object within the captured image by using a reference value set based on an attribute of the object within the captured image; and a gate controlling means that controls opening and closing of the gate based on a result of the matching and the estimated distance to the object within the captured image.

Further, an information processing system according to another aspect of the present invention includes: a capturing means that acquires a captured image obtained by capturing a pre-passing side region of a gate; a matching means that executes a matching process of performing matching between an object within the captured image and a previously registered object; a distance estimating means that estimates a distance from the gate to the object within the captured image by using a reference value set based on an attribute of the object within the captured image; and a gate controlling means that controls opening and closing of the gate based on a result of the matching and the estimated distance to the object within the captured image.

Further, a program according to another aspect of the present invention includes instructions for causing an information processing device to realize: a matching means that executes a matching process of performing matching between an object within a captured image obtained by capturing a pre-passing side region of a gate and a previously registered object; a distance estimating means that estimates a distance from the gate to the object within the captured image by using a reference value set based on an attribute of the object within the captured image; and a gate controlling means that controls opening and closing of the gate based on a result of the matching and the estimated distance to the object within the captured image.

Further, an information processing method according to another aspect of the present invention includes: executing a matching process of performing matching between an object within a captured image obtained by capturing a pre-passing side region of a gate and a previously registered object; and also estimating a distance from the gate to the object within the captured image by using a reference value set based on an attribute of the object within the captured image; and controlling opening and closing of the gate based on a result of the matching and the estimated distance to the object within the captured image.

With the configurations as described above, the present invention can provide an information processing device which can realize smoothly passing through a gate.

### BRIEF DESCRIPTION OF DRAWINGS

Fig. 1 is a view showing a situation in which a face authentication system in a first example embodiment of the present invention is used;
Fig. 2 is a block diagram showing the configuration of the face authentication system in the first example embodiment of the present invention;
Fig. 3 is a view showing a situation in which an image is captured by the face authentication system disclosed in Fig. 1;
Fig. 4 is a view showing a situation in which the face authentication system disclosed in Fig. 1 is used;
Fig. 5 is a flowchart showing a processing operation by the face authentication system disclosed in Fig. 1;
Fig. 6 is a flowchart showing a processing operation by a face authentication system in a second example embodiment of the present invention;
Fig. 7 is a block diagram showing the configuration of an information processing system in a third example embodiment of the present invention; and
Fig. 8 is a block diagram showing the configuration of an information processing device in the third example embodiment of the present invention.

### EXAMPLE EMBODIMENTS

### <First Example Embodiment>

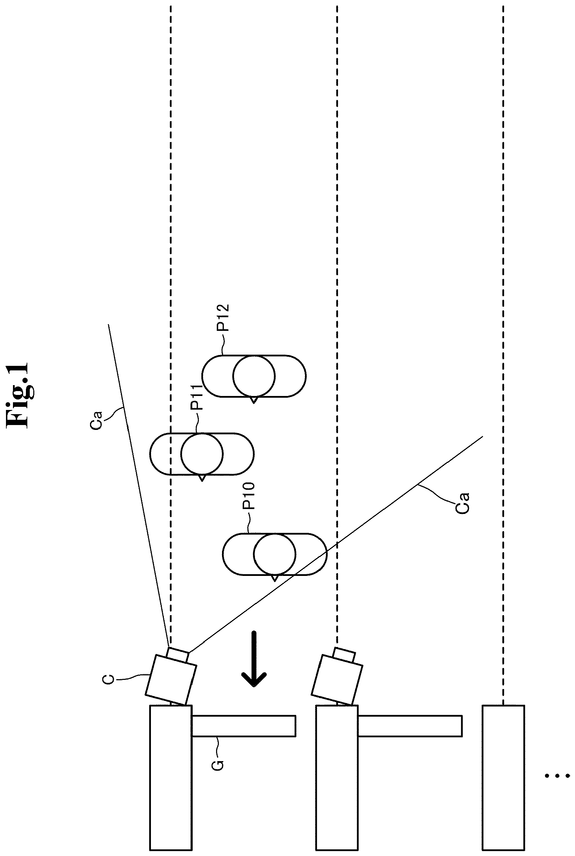

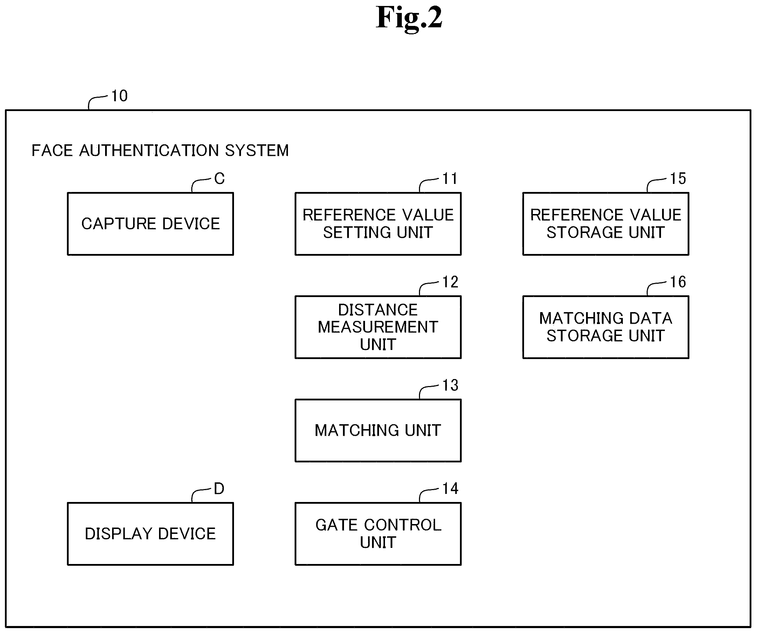

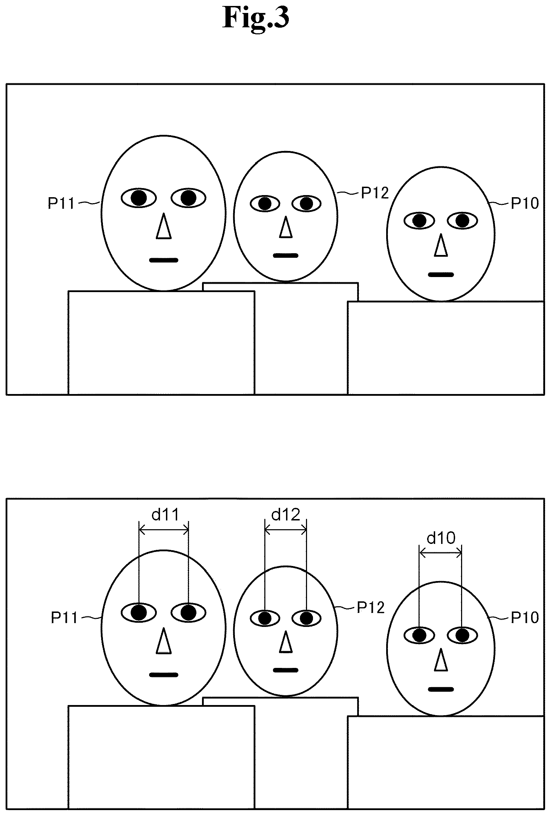

A first example embodiment of the present invention will be described with reference to Figs. 1 to 5. Fig. 1 is a view showing a situation in which a face authentication system is used. Fig. 2 is a view showing the configuration of the face authentication system. Figs. 3 to 5 are views for describing a processing operation by the face authentication system.

### [General Configuration]

A face authentication system 10 (an information processing system) according to the present invention is a system used for restricting and managing entry/exit of a person (an object) in a specific place such as an office or an event venue. For example, a capture device C included by the face authentication system 10 is installed, for each gate that is opened/closed when a person enters/exits, near a place in which the gate is set up.

In an example shown in Fig. 1, a plurality of gates G are arranged in parallel and adjacent to each other, and configured so that persons pass in a direction indicated by an arrow from the right side of Fig. 1 to the gates G. Therefore, a region on the right side in Fig. 1 with reference to each of the gates G is a region where persons remain before passing through the gate (a pre-passing side region). In the pre-passing side regions of the gates G, lanes in which persons who are going to pass through the gates G make lines and pass are located in parallel so as to correspond to the gates G, respectively. The lanes may be or may not be partitioned by some member. In addition, although a case in which a plurality of gates G are arranged adjacent to each other is illustrated in this example embodiment, the number of the gates G may be one.

In the situation shown in Fig. 1, the capture device C included by the face authentication system 10 in this example embodiment is installed near the corresponding gate G and on the right side in view of a person heading to the gate G. However, a position to install the capture device is not limited to the position shown in Fig. 1, and may be any position such as on the left side of the gate or above the gate. The face authentication system 10 also includes display devices D in the vicinity of the respective capture devices C.

The face authentication system 10 captures an image of a person heading to the gate G by the capture device C included by the system. Then, the face authentication system 10 executes a process of matching to check whether or not the person shown in the captured image is a previously registered person based on the face image of the person and, when the matching succeeds, opening the gate G so that the person can pass through. Below, the configuration of the face authentication system 10 will be described in detail.

### [Configuration of Face Authentication System]

The face authentication system 10 in this example embodiment is an information processing device including an arithmetic device and a storage device, configured integrally with the capture device C (a camera) and the display device D (a display). In other words, the capture device C is equipped with the information processing device executing a face authentication process including the arithmetic device and the storage device and with the display device D. However, the face authentication system 10 is not necessarily limited to being configured integrally with the capture device C and the display device D. For example, the capture device C, the display device D, and an information processing device processing a captured image may be configured by separate devices and installed in separate places.

To be specific, as shown in Fig. 2, the face authentication system 10 includes the capture device C and the display device D, and also includes a reference value setting unit 11, a distance measurement unit 12, a matching unit 13 and a gate control unit 14 that are structured by execution of a program by the arithmetic device. Moreover, the face authentication system 10 includes a reference value storage unit 15 and a matching data storage unit 16 that are structured in the storage device.

The abovementioned capture device C (a capturing means) includes a camera and a camera control unit that acquire captured images of the pre-passing side region with reference to the gate G, that is, a region before gate in the corresponding lane at predetermined frame rates. For the capture device C, for example, as shown in Fig. 1, a range sandwiched between lines denoted by reference symbol Ca is a capture region. For example, in a case where three persons P10, P11, and P12 are on a lane as shown in Fig. 1, a captured image captured by the capture device C is as shown in the upper view of Fig. 3. A captured image is set to be substantially in focus within a range of a preset distance in the perspective direction with reference to the capture device C.

The reference value setting unit 11 (a distance estimating unit) acquires a captured image from the capture device C, and sets a reference value which is necessary for measurement of a distance to an object within the captured image as will be described later in the following manner. To be specific, the reference value setting unit 11 firstly extracts an image portion of a face region of a person to be processed from the captured image. Extraction of a face region of a person is performed, for example, by determining from the position of a moving person with reference to the entire image, the color of the person, or the like. Then, the reference value setting unit 11 executes an attribute analysis process of identifying an attribute of the person from the image portion of the face region. Herein, an attribute of the person is, for example, gender, age (generation, adult, child), and race.

In the attribute analysis process, the reference value setting unit 11, for example, identifies an attribute of the person by extracting attribute identification information that is information necessary for identifying an attribute from the image portion of the face region, and comparing the extracted attribute identification information with previously registered attribute identification reference information. Herein, the attribute identification information is, for example, information representing a physical characteristic that generally appears in the face region of the person for each attribute such as gender or age. The attribute analysis process of identifying the attribute such as gender or age (generation) of the person can be realized by the existing technique, and thus the detailed description of the process will be omitted. The attribute that can be identified is not limited to the abovementioned attributes, and may be any attribute.

Subsequently, the reference value setting unit 11 sets a reference value corresponding to the identified attribute of the person. Herein, the reference value is previously registered in the reference value storage unit 15 and, for example, in this example embodiment, a reference value of an eye-to-eye distance representing a distance between both eyes of a person is registered for each attribute. As an example, in a case where a certain numerical value is registered as an eye-to-eye distance that is a reference value of an attribute "male", an eye-to-eye distance that is a reference value of an attribute "female" is set to a smaller value than the reference value of the attribute "male". Moreover, for example, in a case where a certain numerical value is registered as an eye-to-eye distance that is a reference value of an attribute "adult" with age 15 years old to 70s, an eye-to-eye distance that is a reference value of an attribute "child" with age less than 15 years old is set to a smaller value than the reference value of the attribute "adult". Thus, the reference value is a value corresponding to a general physical constitution of the attribute of a person. Then, the reference value setting unit 11 sets the reference value registered corresponding to the attribute identified for the person extracted from the captured image, as the reference value of the person.

The distance measurement unit 12 (the distance estimating unit) measures a distance to a person by using a reference value set for the person in the abovementioned manner. To be specific, the distance measurement unit 12 firstly detects, as object information representing a feature of a person within a captured image, an eye-to-eye distance representing a distance between both eyes of the person from an image portion of a face region of the person. For example, the distance measurement unit 12 detects the eye-to-eye distances of the persons P10, P11 and P12 within the captured image as denoted by reference numerals d10, d11 and d12 in the lower view of Fig. 3. Then, the distance measurement unit 12 compares the eye-to-eye distances d10, d11 and d12 having been detected with the reference values set for the persons P10, P11 and P12, and thereby measures the distances from the gate G to the respective persons. For example, the distance measurement unit 12 measures the distance between the gate G and the person based on a difference between the reference value set for the person and the eye-to-eye distance detected from the person or the ratio of the difference. The distance measurement unit 12 may measure a relative distance of the person within the captured image, that is, what the person's order to the gate G is, as the distance to the gate G.

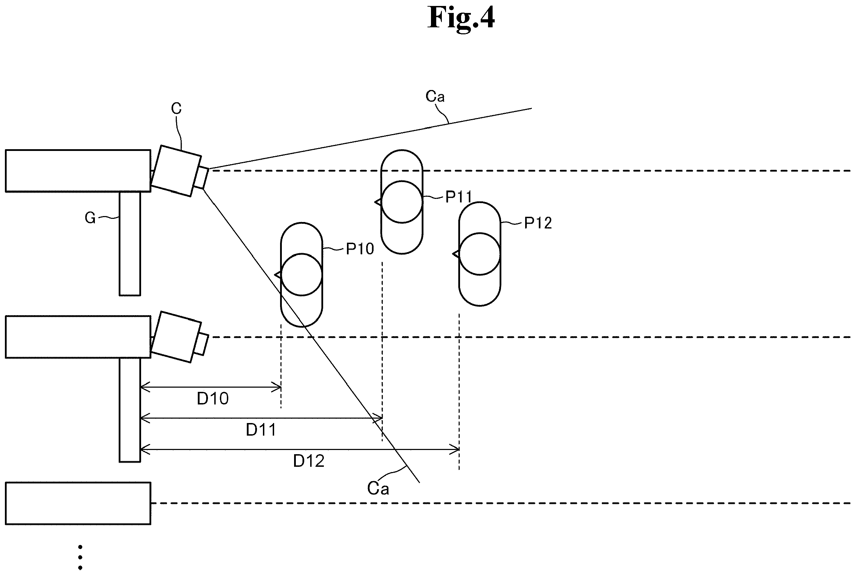

Herein, an example of measurement of the distances from the gate G to the persons P10, P11 and P12 will be described. In the example of Fig. 1, the persons P10, P11 and P12 are in line in the order of the person P10, the person P11 and the person P12 to the gate G, and the captured image is as shown in the lower view of Fig. 3. At this time, when the physical constitutions and face sizes of the persons P10, P11 and P12 are almost the same, the eye-to-eye distances d10, d11 and d12 of the persons P10, P11 and P12 are generally d10 > d11 > d12. Meanwhile, when the person P10 is a child and the persons P11 and P12 are adults, it is generally thought that a child has a smaller face and a shorter eye-to-eye distance, so that the actually measured eye-to-eye distances are d11 > d12 > d10. According to this example embodiment, in such a situation, the attribute of the person P10 is identified to be "child", a reference value of a smaller value is set, and the distance is measured using the reference value and the detected eye-to-eye distance d10. Then, the attributes of the persons P11 and P12 are identified to be "adult", a reference value of a larger value is set, and the distances are measured using the reference value and the detected eye-to-eye distances d11 and d12. Consequently, as shown in Fig. 4, it is possible to measure distances D10, D11 and D12 from the gate to the persons so as to be in order of the person P10, the person P11 and the person P12 in the same order as the actual order to the gate G.

The method for detecting the eye-to-eye distance by the distance measurement unit 12 is not limited to the method described above, and any method may be used. Moreover, the distance measurement unit 12 may measure the distance by detecting the size of another site of the person or another characteristic of the person as the object information, instead of the eye-to-eye distance. In this case, the reference value described above also becomes a value corresponding to the object information.

The distance measurement unit 12 is not necessarily limited to measuring a distance from the gate G to a person. For example, the distance measurement unit 12 may estimate a relative positional relation between persons with reference to the gate. As an example, the distance measurement unit 12 may estimate the proximity of each of persons to the gate, that is, a perspective relation between the persons with reference to the gate G, based on the object information such as the eye-to-eye distance described above and the reference value.

The matching unit 13 (a matching unit) executes a process of matching between a person within a captured image and a previously registered person. At this time, the matching unit 13 executes the matching process based on a distance to the person measured as described above. For example, in a case where a person is located in a predetermined range located at a preset distance from the gate G set immediately before the gate G and the person is located the closest to the gate G within the captured image, the matching unit 13 executes the matching process on the person. The matching unit 13 may execute the matching process on a person simply when the person is located in a predetermined range located at a preset distance from the gate G set immediately before the gate G, or may execute the matching process on a person based on another criterion depending on a distance to the person. Moreover, when the distance measurement unit 12 estimates only the relative positional relation between persons with reference to the gate G as described above, the matching unit 13 may execute the matching process on the person who is the closest to the gate G based on the positional relation.

The matching process by the matching unit 13 is executed in the following manner, for example. First, the matching unit 13 generates a feature value that is necessary for the matching from a face region of a person to be processed. Then, the matching unit 13 calculates a matching score such as the degree of similarity between the generated feature value and a feature value of a person previously registered in the matching data storage unit 16, and determines whether or not the matching score is higher than a threshold value. In a case where the matching score is higher than the threshold value, the matching unit 13 determines that the matching succeeds, and determines that the person who is about to pass through the gate G is the previously registered person. At this time, the feature value of the person detected for the matching may be a feature value used in the existing face matching technique, or may be a feature value calculated by any method. Moreover, the matching method may be any method.

The gate control unit 14 (a gate controlling unit) first determines whether or not a person is permitted to pass through the gate G based on the result of the matching by the matching unit 13. To be specific, the gate control unit 14 determines a person successfully matched by the matching unit 13 to be permitted to pass. Moreover, the gate control unit 14 has a function to display the matching result, that is, success or failure of the matching onto the display device D. Moreover, the gate control unit 14 has a gate control function to open and close the gate G, and controls the gate G to open for a person determined to be permitted to pass. Thus, the gate control unit 14 controls the opening and closing of the gate G depending on the result of the matching process executed based on the distance between the person and the gate G, so that it can be said that the gate control unit 14 controls the opening and closing of the gate G based on a measured distance to a person within a captured image.

The display device D is placed with its display screen facing the pre-passing side region of the gate G so that a person who is about to pass through the gate G can visually recognize. Meanwhile, the display device D may not be installed necessarily.

### [Operation]

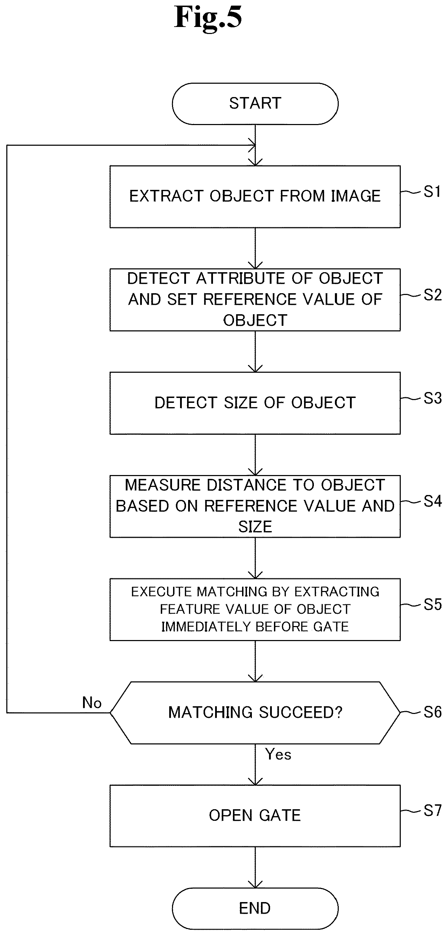

Next, an operation of the abovementioned face authentication system 10 will be described with reference to a flowchart of Fig. 5. Herein, the operation of the face authentication system 10 corresponding to the gate G will be described using a case where persons are in a line with reference to the gate G as shown in Figs. 3 and 4 as an example.

The capture device C corresponding to the gate G keeps capturing images of the pre-passing side region of the gate G. Then, the face authentication system 10 executes the following process on the captured images captured by the capture device C at all times.

First, the reference value setting unit 11 extracts the persons (objects) P10, P11 and P12 to be processed from the captured image (step S1). Then, the reference value setting unit 11 executes an attribute analysis process on image portions of face regions of the extracted persons, and identifies the attributes of the persons. For example, in the example shown by Figs. 1 and 3, it is assumed that the reference value setting unit 11 identifies the attribute of the person P10 as child, and identifies the attributes of the persons P11 and P12 as adult. Then, the reference value setting unit 11 sets reference values registered in the reference value storage unit 15 corresponding to the identified attributes of the persons, as reference values of the persons (step S2). For example, in the example shown by Figs. 3 and 4, the reference value setting unit 11 sets a reference value corresponding to child for the person P10, and sets a reference value corresponding to adult for the persons P11 and P12.

Subsequently, the distance measurement unit 12 detects the size of a predetermined site that is a person's feature as object information necessary for measuring a distance from a person in a captured image to the gate G, herein, detects the eye-to-eye distances of the persons (step S3). For example, the distance measurement unit 12 detects the eye-to-eye distances of the persons P10, P11 and P12 as shown by reference numerals d10, d11 and d12 in the lower view of Fig. 3.

Then, the distance measurement unit 12 measures the distances from the gate G to the persons P10, P11 and P12 by comparing the reference values set for the persons P10, P11 and P12 as described above with the eye-to-eye distances d10, d11 and d12 of the persons P10, P11 and P12 for each person (step S4). For example, in the example shown by the lower view of Fig. 3, the eye-to-eye distance d11 of the person P11 who is the second from the gate among the three persons is shown the largest. However, since the reference values set for the persons P10, P11 and P12 are different, the distances D10, D11 and D12 to the persons are measured so as to be in order of the person P10, the person P11 and the person P12 as shown in Fig. 4 in the same order as the actual order with reference to the gate G.

Subsequently, the matching unit 13 executes the matching process on the respective persons based on the distances to the persons P10, P11 and P12 measured as described above. At this time, in a case where the person is located at a preset distance from the gate G set immediately before the gate G and the person is located the closest to the gate G within the captured image, the matching unit 13 executes the matching process on the person (step S5, step S6). Therefore, in the example shown by Fig. 4, the matching unit 13 executes the matching process on the person P10. To be specific, the matching unit 13 generates a feature value that is necessary for the matching from the face region of the person to be processed, and calculates a matching score such as the degree of similarity between the generated feature value and a feature value of a person previously registered in the matching data storage unit 16. Then, the matching unit 13 determines that the matching has succeeded when the matching score is higher than a threshold value.

In a case where the matching of the person P10 located immediately before the gate G has succeeded as a result of the matching process by the matching unit 13 (Yes at step S6), the gate control unit 14 permits the person P10 to pass through the gate G, and controls the gate G to open (step S7). At this time, the gate control unit 14 displays "permitted to pass" on the display device D.

Meanwhile, in a case where the matching by the matching unit 13 has failed (No at step S6), the gate control unit 14 keeps the gate closed. At this time, the gate control unit 14 may display guide information about passage together with display of "forbidden to pass". For example, in a case where it is determined in the matching process by the matching unit 13 that the quality of the feature value necessary for the matching is low (the quality of the face image is low), the gate control unit 14 may display guide information for obtaining a feature value of quality necessary for the matching. The guide information is information such as "take off the mask" or "face the front".

From the above, according to the face authentication system 10 of this example embodiment, even when persons having various attributes are about to pass through the gate G, it is possible to properly determine the sequence of the persons with reference to the gate G, and perform matching of the person located immediately before the gate and opening/closing of the gate. For example, in the example shown by Figs. 3 and 4, there is a fear that based on the sizes of the persons shown in the captured image, the person P11 who is actually located the second from the gate G is falsely determined to be the closest to the gate G. However, the method of this example embodiment allows execution of the matching process on the person P10 who is actually located the closest to the gate G. As a result, it is possible to realize that a person smoothly passes through the gate G.

Then, the abovementioned process of identifying the attribute of the person and process of measuring the distance are processes with less load on the information processing device than the matching process of performing extraction of the feature value of the person and matching. Therefore, it is possible to maintain a high-speed matching process, and it is possible to realize that a person can smoothly pass through the gate G.

Although a case where an object that is about to pass through the gate G is a person is illustrated above, the object is not limited to a person and may be any object. For example, the object may be an object such as baggage. In accordance with this, information used for measurement of the distance from the gate G, such as the reference value and the object information representing the feature of the object described above, may be information representing any feature that can be detected from the object. Moreover, when performing the matching process, any feature value that can be detected from the object may be used.

### <Second Example Embodiment>

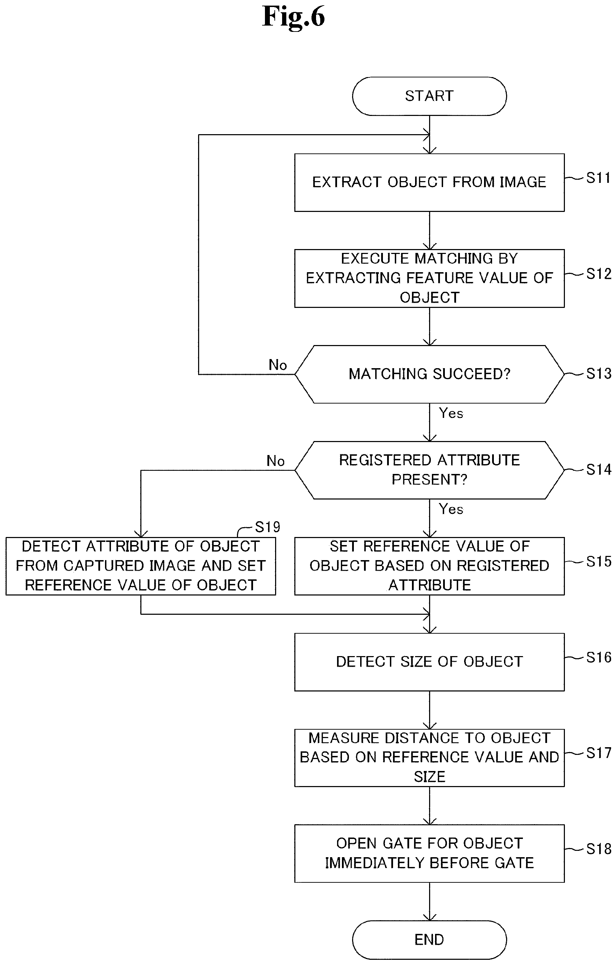

Next, a second example embodiment of the present invention will be described with reference to Fig. 6. Fig. 6 is a view for describing a processing operation of the face authentication system.

The face authentication system 10 of this example embodiment is configured in a manner similar to that of the first example embodiment, but is different in a process of setting a reference value in accordance with the attribute of a person. Below, the different configuration from that of the first example embodiment will be described in detail.

The matching unit 13 (the matching unit) in this example embodiment, when a captured image is captured by the capture device C, extracts a person from the captured image and executes a matching process on the person first. To be specific, the matching unit 13 extracts persons from the captured image, regards all the extracted persons as targets for matching, and generates feature values that are necessary for matching from face regions of the persons. Then, the matching unit 13 calculates a matching score such as the degree of similarity between the generated feature value and a feature value of a person previously registered in the matching data storage unit 16 and, when the matching score is higher than a threshold value, determines that the matching succeeds.

When the matching succeeds, the matching unit 13 acquires information of the person registered in the matching data storage unit 16 used for the matching, and retrieves the attribute of the person included in the information of the person. Then, the matching unit 13 passes the retrieved attribute to the reference value setting unit 11. Herein, the matching data storage unit 16 stores information of the attribute (gender, generation, or the like) of the person previously identified, together with the feature value of the person used for the matching process.

Further, the reference value setting unit 11 (the distance estimating unit) in this example embodiment identifies the attribute of the person within the captured image based on the result of the matching process by the matching unit 13. That is, the reference value setting unit 11 identifies the attribute of the registered person passed from the matching unit 13 as described above, as the attribute of the person within the captured image. Then, the reference value setting unit 11 sets a reference value registered in the reference value storage unit 15 corresponding to the identified attribute of the person, as the reference value of the person.

Then, the distance measurement unit 12 (the distance estimating unit) in this example embodiment measures a distance to a person using a reference value set for the person as in the first example embodiment. To be specific, the distance measurement unit 12 detects an eye-to-eye distance from the person within the captured image, and compares the detected eye-to-eye distance with the reference value set for the person to measure a distance from the gate G to the person. At this time, the distance measurement unit 12 associates the abovementioned determination that the matching succeeds by the matching unit 13 and the measured distance, with the person within the captured image. Herein, the distance measurement unit 12, every time a captured image is acquired, measures the distance to a person within the captured image and updates the distance associated with the person in the captured image. Meanwhile, association of persons in captured images that are temporally different from each other can be realized by tracking feature points, or the like. Therefore, in a case where the matching of a person within a captured image succeeds even one time, the person is tracked in a succeeding captured image, and the fact that the matching has succeeded and the updated distance are associated.

Then, the gate control unit 14 (the gate controlling unit) in this example embodiment controls the opening and closing of the gate G based on the distance associated with the person within the captured image. That is, in a case where the fact that the matching has succeeded is already associated with the person within the captured image, the distance associated with the person is within a predetermined range located at a preset distance from the gate G set immediately before the gate G, and the person is located the closet to the gate G within the captured image, the gate control unit 14 determines the person to be permitted to pass. Then, the gate control unit 14 displays the result of the matching, that is, success of the matching on the display device D, and controls the gate G to open. Thus, the gate control unit 14 controls the opening and closing of the gate G based on the distance from the person within the captured image to the gate G.

The gate control unit 14 may instruct the matching unit 13 to execute a final matching process on the person within the captured image located immediately before the gate G again. Then, the gate control unit 14 may open the gate G only when the final matching process succeeds.

As a result of the matching process by the matching unit 13 described above, the matching has succeeded, but the attribute of the person within the captured image may not be identified because the attribute of the person is not registered in the matching data storage unit 16. In such a case, as in the first example embodiment, firstly, the reference value setting unit 11 executes the attribute analysis process on an image portion of the person within the captured image to identify the attribute of the person, and sets a reference value corresponding to the attribute. Then, the distance measurement unit 12 measures the distance to the person using the set reference value, and the gate control unit 14 controls the opening and closing of the gate based on the processing result of the matching process.

Even if matching of the person within the captured image has failed as a result of the matching process by the matching unit 13 described above, the reference value setting unit 11 may identify the attribute of the person and the distance measurement unit 12 may measure the distance to the person as in the first example embodiment. Then, the distance measurement unit associates the fact that the matching has failed and the distance with an identical person tracked within a succeeding captured image, whereby the gate control unit 14 may determine whether or not permitted to pass when the person is located immediately before the gate G based on the above information. At this time, the gate control unit 14 may display guide information about passage described above.

### [Operation]

Next, the operation of the face authentication system 10 described above will be described with reference to Fig. 6. The capture device C corresponding to the gate G keeps capturing images of the pre-passing side region of the gate G. The face authentication system 10 then executes the following process at all times on the captured images having been captured.

First, the matching unit 13 extracts a person (an object) to be processed from a captured image (step S11). The matching unit 13 regards all persons extracted from the captured image as targets for matching, and generates a feature value necessary for matching from a face region of each of the persons. Then, the matching unit 13 calculates a matching score such as the degree of similarity between the generated feature value and a feature value of a person previously registered in the matching data storage unit 16, and executes the matching process (step S12).

When the matching succeeds (Yes at step S13), the matching unit 13 acquires information of the person registered in the matching data storage unit 16 used for the matching, and retrieves an attribute of the person included in the information of the person (step S14). When the matching unit 13 can retrieve the attribute of the person (Yes at step S14), the reference value setting unit 11 identifies the retrieved attribute as an attribute of the person within the captured image. Then, the reference value setting unit 11 sets a reference value registered in the reference value storage unit 15 corresponding to the identified attribute of the person, as a reference value of the person (step S15).

Subsequently, the distance measurement unit 12 detects the size of a predetermined site that is a person's feature as object information necessary for measurement of a distance from the person within the captured image to the gate G, herein, detects the eye-to-eye distance of the person (step S16). Then, the distance measurement unit 12 measures the distance from the gate G to the person by comparing the reference value set for the person as described above with the eye-to-eye distance of the person (step S17). At this time, the distance measurement unit 12 associates the measured distance with the person within the captured image.

Subsequently, in a case where the distance to the person within the captured image is within a preset distance range immediately before the gate and the person is located the closest to the gate G within the captured image, the gate control unit 14 controls the gate G to open (step S 18). The abovementioned measurement of the distance to the person by the distance measurement unit 12 is performed at all times, and the latest distance is associated with the person within the captured image having been successfully matched. Therefore, the gate control unit 14 executes control to open the gate G every time the distance associated with the person having been successfully matched is at a set distance immediately before the gate.

Herein, after the matching succeeds as described above (Yes at step S13), in a case where an attribute of the person cannot be identified because, for example, an attribute of the person is not registered in the matching data storage unit 16 (No at step S14), the reference value setting unit 11 sets a reference value of the person in the same manner as in the first example embodiment. That is, the reference value setting unit 11 extracts the person to be processed from the captured image, and executes the attribute analysis process on an image portion of a face region of the extracted person to identify an attribute of the person. Then, the reference value setting unit 11 sets a reference value registered in the reference value storage unit 15 corresponding to the identified attribute of the person, as an attribute value of the person (step S19).

After that, the distance measurement unit 12 measures the distance from the person within the captured image to the gate G by using the set reference value in the same manner as described above (steps S16, S17). Then, in a case where the distance from the person within the captured image is within a set distance immediately before the gate and the person is located the closet to the gate G within the capture4d image, the gate control unit 14 controls the gate G to open (step S18).

As described above, the face authentication system 10 of this example embodiment first executes the matching process on a person, and then opens the gate G depending on the distance from the person to the gate G. Therefore, it is possible to properly open the gate G when the person comes close to the gate G, and it is possible to realize that the person smoothly passes through the gate G.

### <Third Example Embodiment>

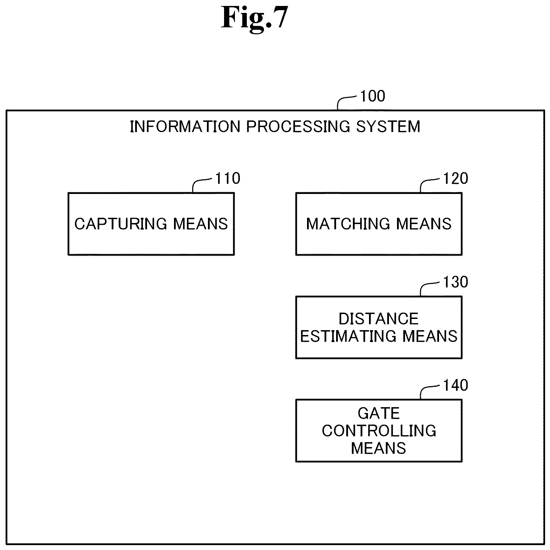

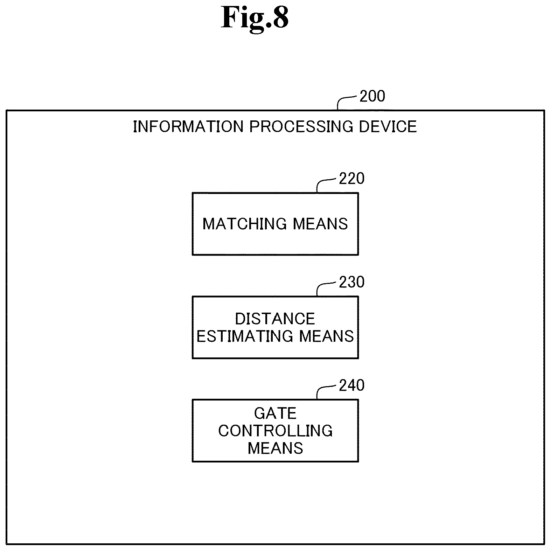

Next, a third example embodiment of the present invention will be described with reference to Figs. 7 and 8. Fig. 7 is a block diagram showing a configuration of an information processing system in the third example embodiment. Fig. 8 is a block diagram showing a configuration of an information processing device in the third example embodiment. In this example embodiment, the overview of the configuration of the face authentication system described in the first and second example embodiments will be illustrated.

As shown in Fig. 7, an information processing system 100 in this example embodiment includes: a capturing means 110 that acquires a captured image obtained by capturing a pre-passing side region with reference to a gate; a matching means 120 that executes a process of matching between an object within the captured image and a previously registered object; a distance estimating means 130 that estimates a distance from the gate to the object within the captured image by using a reference value set based on an attribute of the object within the captured image; and a gate controlling means 140 that controls opening and closing of the gate based on a result of the matching and the estimated distance to the object within the captured image.

Further, in this example embodiment, the capturing means 110 may be eliminated from the information processing system 100 shown in Fig. 8.

That is to say, an information processing device 200 in this example embodiment includes: a matching means 220 that executes a process of matching between an object within a captured image obtained by capturing a pre-passing side region of a gate and a previously registered object; a distance estimating means 230 that estimates a distance to the object within the captured image by using a reference value set based on an attribute of the object within the captured image; and a gate controlling means 240 that controls opening and closing of the gate based on a result of the matching and the estimated distance to the object within the captured image.

The matching means 120, 220, the distance estimating means 130, 230, and the gate controlling means 140, 240 may be structured by execution of a program by an arithmetic device, or may be structured by electronic circuits.

Then, the information processing system 100 and the information processing device 200 with the above configurations each operate to execute: a process of matching between an object within a captured image obtained by capturing a pre-passing side region of a gate and a previously registered object; and also a process of estimating a distance from the gate to the object within the captured image by using a reference value set based on an attribute of the object within the captured image, and controlling opening and closing of the gate based on a result of the matching and the estimated distance to the object within the captured image.

The information processing system 100 and the information processing device 200 described above are each able to, even when persons with various attributes are going to pass through the gate, properly determine the sequence of the persons with reference to the gate, and execute the matching on the person immediately before the gate and execute opening and closing of the gate. As a result, it is possible to realize that the person smoothly passes through the gate.

### <Supplementary Notes>

The whole or part of the example embodiments disclosed above can be described as the following supplementary notes. Below, the overview of the configurations of the information processing device, the information processing system, the program, and the information processing method according to the present invention will be described. However, the present invention is not limited to the following configurations

### (Supplementary Note 1)

An information processing device comprising:
a matching means that executes a matching process of performing matching between an object within a captured image obtained by capturing a pre-passing side region of a gate and a previously registered object;
a distance estimating means that estimates a distance from the gate to the object within the captured image by using a reference value set based on an attribute of the object within the captured image; and
a gate controlling means that controls opening and closing of the gate based on a result of the matching and the estimated distance to the object within the captured image.

### (Supplementary Note 2)

The information processing device according to Supplementary Note 1, wherein:
the matching means executes the matching process based on the estimated distance to the object within the captured image; and
the gate controlling means controls the opening and closing of the gate based on a processing result of the matching process executed based on the distance to the object within the captured image.

### (Supplementary Note 3)

The information processing device according to Supplementary Note 2, wherein
the distance estimating means identifies an attribute of the object within the captured image based on an attribute analysis process on an image portion of the object, sets the reference value corresponding to the attribute, and estimates the distance to the object within the captured image by using the set reference value.

### (Supplementary Note 4)

The information processing device according to Supplementary Note 1, wherein
the distance estimating means identifies an attribute of the previously registered object as an attribute of the object within the captured image from a result of the matching process, sets the reference value corresponding to the attribute, and estimates the distance to the object within the captured image by using the set reference value.

### (Supplementary Note 5)

The information processing device according to Supplementary Note 4, wherein
the distance estimating means, when failed in identifying the attribute of the object within the captured image from the result of the matching process, identifies the attribute of the object within the captured image based on an attribute analysis process on an image portion of the object, sets the reference value corresponding to the attribute, and estimates the distance to the object within the captured image by using the set reference value.

### (Supplementary Note 6)

The information processing device according to any of Supplementary Notes 1 to 5, wherein
the distance estimating means detects object information representing a feature of the object within the object image, and estimates the distance to the object within the captured image based on the reference value and the object information.

### (Supplementary Note 7)

The information processing device according to Supplementary Note 6, wherein
the distance estimating means detects a size of a predetermined site of the object within the captured image as the object information, and estimates the distance to the object within the captured image based on the size of the predetermined site of the object with reference to the reference value.

### (Supplementary Note 8)

The information processing device according to Supplementary Note 7, wherein
the distance estimating means compares sizes of predetermined sites of respective objects within the identical captured image with reference to reference values set corresponding to the objects, with each other, and determines a perspective relation between the objects within the captured image with reference to the gate.

### (Supplementary Note 9)

The information processing device according to any of Supplementary Notes 1 to 8, wherein
the gate controlling means controls the opening and closing of the gate based on the result of the matching on the object within the captured image by the matching means and the distance from the gate to the object, the result and the distance being associated with each other for the obj ect.

### (Supplementary Note 10)

An information processing system comprising:
a capturing means that acquires a captured image obtained by capturing a pre-passing side region of a gate;
a matching means that executes a matching process of performing matching between an object within the captured image and a previously registered object;
a distance estimating means that estimates a distance from the gate to the object within the captured image by using a reference value set based on an attribute of the object within the captured image; and
a gate controlling means that controls opening and closing of the gate based on a result of the matching and the estimated distance to the object within the captured image.

### (Supplementary Note 10.1)

The information processing system according to Supplementary Note 10, wherein:
the matching means executes the matching process based on the estimated distance to the object within the captured image; and
the gate controlling means controls the opening and closing of the gate based on a processing result of the matching process executed based on the distance to the object within the captured image.

### (Supplementary Note 10.2)

The information processing system according to Supplementary Note 10, wherein
the distance estimating means identifies an attribute of the previously registered object as an attribute of the object within the captured image from a result of the matching process, sets the reference value corresponding to the attribute, and estimates the distance to the object within the captured image by using the set reference value.

### (Supplementary Note 11)

A program comprising instructions for causing an information processing device to realize:
a matching means that executes a matching process of performing matching between an object within a captured image obtained by capturing a pre-passing side region of a gate and a previously registered object;
a distance estimating means that estimates a distance from the gate to the object within the captured image by using a reference value set based on an attribute of the object within the captured image; and
a gate controlling means that controls opening and closing of the gate based on a result of the matching and the estimated distance to the object within the captured image.

### (Supplementary Note 11.1)

The program according to Supplementary Note 11, wherein:
the matching means executes the matching process based on the estimated distance to the object within the captured image; and
the gate controlling means controls the opening and closing of the gate based on a processing result of the matching process executed based on the distance to the object within the captured image.

### (Supplementary Note 11.2)

The program according to Supplementary Note 11, wherein
the distance estimating means identifies an attribute of the previously registered object as an attribute of the object within the captured image from a result of the matching process, sets the reference value corresponding to the attribute, and estimates the distance to the object within the captured image by using the set reference value.

### (Supplementary Note 12)

An information processing method comprising:
executing a matching process of performing matching between an object within a captured image obtained by capturing a pre-passing side region of a gate and a previously registered object;
estimating a distance from the gate to the object within the captured image by using a reference value set based on an attribute of the object within the captured image; and
controlling opening and closing of the gate based on a result of the matching and the estimated distance to the object within the captured image.

### (Supplementary Note 13)

The information processing method according to Supplementary Note 12, comprising:
executing the matching process based on the estimated distance to the object within the captured image; and
controlling the opening and closing of the gate based on a processing result of the matching process executed based on the distance to the object within the captured image.

### (Supplementary Note 13.1)

The information processing method according to Supplementary Note 13, comprising
identifying an attribute of the object within the captured image based on an attribute analysis process on an image portion of the object, and setting the reference value corresponding to the attribute.

### (Supplementary Note 14)

The information processing method according to Supplementary Note 12, comprising:
identifying an attribute of the previously registered object as an attribute of the object within the captured image from a result of the matching process, and setting the reference value corresponding to the attribute;
measuring the distance to the target within the captured image by using the reference value; and
controlling the opening and closing of the gate based on the distance to the object within the captured image.

### (Supplementary Note 15)

The information processing method according to Supplementary Note 14, comprising:
when identifying the attribute of the object within the captured image from the result of the matching process has failed, identifying the attribute of the object within the captured image based on an attribute analysis process on an image portion of the object, and setting the reference value corresponding to the attribute;
measuring the distance to the object within the captured image by using the reference value; and
controlling the opening and closing of the gate based on the measured distance to the object within the captured image.

### (Supplementary Note 15.1)

The information processing method according to any of Supplementary Notes 12 to 15, comprising
detecting object information representing a feature of the object within the object image, and measuring the distance to the object within the captured image based on the reference value and the object information.

### (Supplementary Note 15.2)

The information processing method according to Supplementary Note 15.1, comprising
detecting a size of a predetermined site of the object within the captured image as the object information, and measuring the distance to the object within the captured image based on the size of the predetermined site of the object with reference to the reference value.

### (Supplementary Note 15.3)

The information processing method according to Supplementary Note 15.2, comprising
comparing sizes of predetermined sites of respective objects within the identical captured image with reference to reference values set corresponding to the objects, with each other, and determining a perspective relation between the objects within the captured image with reference to the gate.

The program described above can be stored using various types of non-transitory computer-readable mediums and supplied to a computer. The non-transitory computer-readable mediums include various types of tangible storage mediums. Examples of the non-transitory computer-readable mediums include a magnetic recording medium (for example, a flexible disk, a magnetic tape, a hard disk drive), a magneto-optical recording medium (for example, a magneto-optical disk), a CD-ROM (Read Only Memory), a CD-R, a CD-R/W, and a semiconductor memory (for example, a mask ROM, a PROM (Programmable ROM), an EPROM (Erasable PROM), a flash ROM, a RAM (Random Access Memory). The program may be supplied to a computer by various types of transitory computer-readable mediums. Examples of the transitory computer-readable mediums include electric signals, optical signals, and electromagnetic waves. The transitory computer-readable medium can supply a program to a computer via a wired communication path such as an electric line and an optical fiber, or a wireless communication path.

Although the present invention has been described above with reference to the example embodiments, the present invention is not limited to the example embodiments described above. The configurations and details of the present invention can be changed in various manners that can be understood by one skilled in the art within the scope of the present invention.

The present invention is based upon and claims the benefit of priority from Japanese patent application No. 2018-014274, filed on January 31, 2018, the disclosure of which is incorporated herein in its entirety by reference.

### DESCRIPTION OF NUMERALS

- 10: face authentication system
- 11: reference value setting unit
- 12: distance measurement unit
- 13: matching unit
- 14: gate control unit
- 15: reference value storage unit
- 16: matching data storage unit
- 100: information processing system
- 200: information processing device
- 110: capturing unit
- 120, 220: matching means
- 130, 230: distance estimating means
- 140, 240: gate controlling means
- C: capture device
- D: display device
- G: gate

## Claims

1. An information processing device comprising:
a matching means that executes a matching process of performing matching between an object within a captured image obtained by capturing a pre-passing side region of a gate and a previously registered object;
a distance estimating means that estimates a distance from the gate to the object within the captured image by using a reference value set based on an attribute of the object within the captured image; and
a gate controlling means that controls opening and closing of the gate based on a result of the matching and the estimated distance to the object within the captured image.

2. The information processing device according to Claim 1, wherein:
the matching means executes the matching process based on the estimated distance to the object within the captured image; and
the gate controlling means controls the opening and closing of the gate based on a processing result of the matching process executed based on the distance to the object within the captured image.

3. The information processing device according to Claim 2, wherein
the distance estimating means identifies an attribute of the object within the captured image based on an attribute analysis process on an image portion of the object, sets the reference value corresponding to the attribute, and estimates the distance to the object within the captured image by using the set reference value.

4. The information processing device according to Claim 1, wherein
the distance estimating means identifies an attribute of the previously registered object as an attribute of the object within the captured image from a result of the matching process, sets the reference value corresponding to the attribute, and estimates the distance to the object within the captured image by using the set reference value.

5. The information processing device according to Claim 4, wherein
the distance estimating means, when failed in identifying the attribute of the object within the captured image from the result of the matching process, identifies the attribute of the object within the captured image based on an attribute analysis process on an image portion of the object, sets the reference value corresponding to the attribute, and estimates the distance to the object within the captured image by using the set reference value.

6. The information processing device according to any of Claims 1 to 5, wherein
the distance estimating means detects object information representing a feature of the object within the object image, and estimates the distance to the object within the captured image based on the reference value and the object information.

7. The information processing device according to Claim 6, wherein
the distance estimating means detects a size of a predetermined site of the object within the captured image as the object information, and estimates the distance to the object within the captured image based on the size of the predetermined site of the object with reference to the reference value.

8. The information processing device according to Claim 7, wherein
the distance estimating means compares sizes of predetermined sites of respective objects within the identical captured image with reference to reference values set corresponding to the objects, with each other, and determines a perspective relation between the objects within the captured image with reference to the gate.

9. The information processing device according to any of Claims 1 to 8, wherein
the gate controlling means controls the opening and closing of the gate based on the result of the matching on the object within the captured image by the matching means and the distance from the gate to the object, the result and the distance being associated with each other for the obj ect.

10. An information processing system comprising:
a capturing means that acquires a captured image obtained by capturing a pre-passing side region of a gate;
a matching means that executes a matching process of performing matching between an object within the captured image and a previously registered object;
a distance estimating means that estimates a distance from the gate to the object within the captured image by using a reference value set based on an attribute of the object within the captured image; and
a gate controlling means that controls opening and closing of the gate based on a result of the matching and the estimated distance to the object within the captured image.

11. A program comprising instructions for causing an information processing device to realize:
a matching means that executes a matching process of performing matching between an object within a captured image obtained by capturing a pre-passing side region of a gate and a previously registered object;
a distance estimating means that estimates a distance from the gate to the object within the captured image by using a reference value set based on an attribute of the object within the captured image; and
a gate controlling means that controls opening and closing of the gate based on a result of the matching and the estimated distance to the object within the captured image.

12. An information processing method comprising:
executing a matching process of performing matching between an object within a captured image obtained by capturing a pre-passing side region of a gate and a previously registered object; and also
estimating a distance from the gate to the object within the captured image by using a reference value set based on an attribute of the object within the captured image; and
controlling opening and closing of the gate based on a result of the matching and the estimated distance to the object within the captured image.

13. The information processing method according to Claim 12, comprising:
executing the matching process based on the estimated distance to the object within the captured image; and
controlling the opening and closing of the gate based on a processing result of the matching process executed based on the distance to the object within the captured image.

14. The information processing method according to Claim 13, comprising:
identifying an attribute of the previously registered object as an attribute of the object within the captured image from a result of the matching process, and setting the reference value corresponding to the attribute;
estimating the distance to the target within the captured image by using the reference value; and
controlling the opening and closing of the gate based on the distance to the object within the captured image.

15. The information processing method according to Claim 14, comprising:
when identifying the attribute of the object within the captured image from the result of the matching process fails, identifying the attribute of the object within the captured image based on an attribute analysis process on an image portion of the object, and setting the reference value corresponding to the attribute;
estimating the distance to the object within the captured image by using the reference value; and
controlling the opening and closing of the gate based on the estimated distance to the object within the captured image.
